# EUROPEAN PATENT APPLICATION

(11) **EP 4 030 344 A1**
(43) Date of publication of application: **20.07.2022**
(21) Application number: 20863613.4
(22) Date of filing: 01.09.2020
(51) Int. Cl.: G06K 19/06, B41M 3/14, B42D 25/382, C09D 11/322, C09D 11/50

(54) **PRINTED OBJECT**

(30) Priority: 13.09.2019 JP 2019167274
(71) Applicant: Kyodo Printing Co., Ltd., Tokyo 112-8501 (JP)
(72) Inventor: TERADA, Akira, Tokyo 112-8501 (JP); KOBAYASHI, Fumihito, Tokyo 112-8501 (JP); KARINO, Masahiro, Tokyo 112-8501 (JP)
(74) Representative: Ricker, Mathias
(86) International application number: PCT/JP2020/033145
(87) International publication number: WO 2021/049381

(57) **Abstract**

A printed object 100 comprises a substrate 10 and a first information code disposed on the substrate 10, wherein: the first information code is constituted of an infrared ray-absorptive ink layer 11 that has been printed with an infrared ray absorptive ink; and the infrared ray absorptive ink layer 11 is configured such that, when a laminated body constituted of a test substrate made of the same material as that of the substrate 10, and a test infrared absorptive ink layer made of the same material as that of the infrared ray absorptive ink layer 11 and disposed on the test substrate is subjected to a relative spectral reflectivity measurement on the test infrared ray absorptive ink layer side, with the test substrate as the reference (100% reflectivity), the minimum relative reflectivity in the visible region is 50% or higher, and the minimum relative reflectivity in the infrared region is 75% or lower.

## Description

### FIELD

The present invention relates to a printed object.

### BACKGROUND

For securities which include highly secure information such as personal data in the form of, for example, an information code, there is required a method for writing a highly secure information code that cannot be easily deciphered.

The use of an ink having an infrared absorption function has been proposed in this field.

For example, PTL 1 proposes an infrared absorbent ink, containing one or more infrared absorbent material microparticles selected from composite tungsten oxides and tungsten oxides having a Magnéli phase in a vehicle.

### [CITATION LIST]

### [PATENT LITERATURE]

[PTL 1] WO 2016/121801

### SUMMARY

### [TECHNICAL PROBLEM]

The technique of PTL 1 relates to an ink for printing a pattern or text that can be printed, for example, by inkjet and read reliably by an infrared code reader. When the ink is used as-is for printing an information code, the following issues occur.

When the concentration of infrared absorbent material microparticles in the ink is excessively low, the reliability of reading the information code by an infrared code reader is impaired. However, when the concentration of the infrared absorbent material microparticles in the ink is increased to ensure the reliability of reading the information code by an infrared code reader, the information code becomes visually visible and the designability of the printed object is impaired.

Intended to dispel the concerns in the above prior art, an object of the present invention is to provide a highly secure printed object on which an information code is printed, wherein the presence of the information code is difficult to discern visually while the information code can easily be deciphered by the user thereof.

### [SOLUTION TO PROBLEM]

The present invention is described as follows.

<<Aspect 1>> A printed object comprising a substrate and a first information code on the substrate, wherein
   the first information code is composed of an infrared absorbent ink layer printed with an infrared absorbent ink, and
   the infrared absorbent ink layer is configured such that when a relative spectral reflectance of a first laminate comprising
      a measuring substrate consisting of a material same as the substrate; and
      a measuring infrared absorbent ink layer consisting of a material same as the infrared absorbent ink layer
   is measured from a measuring infrared absorbent ink layer side, with the measuring substrate as a reference (reflectance of 100%),
   the first laminate has a minimum relative reflectance value Rᵥᵢₛ₋ₘᵢₙ in a visible wavelength region of 400 nm to 730 nm being 50% or more; and
   the first laminate has a minimum relative reflectance value Rᵢᵣ₋ₘᵢₙ in an infrared wavelength region of 800 nm to 2,500 nm being 75% or less.
<<Aspect 2>> The printed object according to Aspect 1, wherein
   the printed object further comprises a concealment layer,
   the concealment layer is printed with an infrared non-absorbent ink on the substrate such that at least a portion of the first information code is visually concealed, and
   the concealment layer is configured such that when a relative spectral reflectance of a second laminate comprising
      a measuring substrate consisting of a material same as the substrate; and
      a measuring concealment layer consisting of a material same as the concealment layer on the measuring substrate
   is measured from a measuring concealment layer side, with the measuring substrate as a reference (reflectance of 100%),
   the second laminate has a minimum relative reflectance value Rᵢᵣ₋ₘᵢₙ in an infrared wavelength region of 800 nm to 2,500 nm being 80% or more.
<<Aspect 3>> The printed object comprising a substrate, a first information code on the substrate, and a concealment layer, wherein
   the first information code is composed of an infrared absorbent ink layer printed with an infrared absorbent ink,
   the concealment layer is printed with an infrared non-absorbent ink on the substrate such that at least a portion of the first information code is visually concealed, and
   when infrared light is used as a light source, the first information code is optically readable through the concealment layer.
<<Aspect 4>> The printed object according to Aspect 2 or 3, wherein the concealment layer further comprises a second information code, wherein
   at least a portion of the second information code is present in a region where the first information code is present.
<<Aspect 5>> The printed object according to Aspect 4, wherein the second information code is a barcode or a 2D code.
<<Aspect 6>> The printed object according to any one of Aspects 1 to 5, wherein the first information code is a barcode or a 2D code.
<<Aspect 7>> The printed object according to any one of Aspects 1 to 6, wherein the infrared absorbent ink contains an infrared absorbent pigment and is an infrared absorbent UV ink cured by UV.
<<Aspect 8>> The printed object according to Aspect 7, wherein the infrared absorbent pigment is selected from a tungsten-based infrared absorbent pigment, a tin-based infrared absorbent pigment, and an organic infrared absorbent pigment.
<<Aspect 9>> The printed object according to Aspect 8, wherein the infrared absorbent pigment is a tungsten-based infrared absorbent pigment selected from
   a composite tungsten oxide, represented by general formula (1): MₓW_{y}O_{z}, wherein M is one or more elements selected from the group consisting of H, He, alkali metals, alkaline earth metals, rare earth metals, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
   a tungsten oxide having a Magnéli phase, represented by general formula (2): W_{y}O_{z}, wherein W is tungsten; O is oxygen; y and z are each a positive number; and 2.45 ≤ z/y ≤ 2.999.
<<Aspect 10>> The printed object according to any one of Aspects 7 to 9, wherein the infrared absorbent UV ink contains an infrared absorbent pigment, a solvent, an acrylic resin soluble in the solvent, a UV-curable acrylic monomer, and a photocuring agent.
<<Aspect 11>> The printed object according to Aspect 10, wherein the solvent contains a first solvent capable of dispersing the infrared absorbent pigment and a second solvent compatible with the first solvent and capable of dissolving the acrylic resin.
<<Aspect 12>> The printed object according to any one of Aspects 7 to 9, wherein the infrared absorbent UV ink contains an infrared absorbent pigment, a UV-curable urethane acrylate resin, and a UV-curable acrylic monomer not comprising any urethane bond.
<<Aspect 13>> The printed object according to Aspect 12, wherein the infrared absorbent ink further contains a photocuring agent.
<<Aspect 14>> The printed object according to any one of Aspects 7 to 13, wherein the infrared absorbent pigment in the infrared absorbed ink has a content of 1.0% by weight or more and 10.0% by weight or less with respect to the solid content of the infrared absorbent ink.
<<Aspect 15>> The printed object according to any one of Aspects 1 to 14, which is a security, a certificate, a packaging material, or a textile product.

### [ADVANTAGEOUS EFFECTS OF INVENTION]

According to the present invention, a highly secured printed object on which an information code is printed, wherein the concern of falsification, for example, by cutting and pasting, and the possibility of deciphering the pattern in the printed object are suppressed and the presence of the information code itself can be concealed, can be obtained.

### BRIEF DESCRIPTION OF DRAWINGS

FIG. 1 is a cross-sectional view showing one example of an embodiment of the printed objected of the present invention.
FIG. 2 is a cross-sectional view showing another example of an embodiment of the printed object of the present invention.
FIG. 3 is a perspective view showing one example of a specific application of the printed object shown in FIG. 2.
FIG. 4 is a spectral reflectance graph obtained for the laminates obtained in the Examples and Comparative Examples.

### DESCRIPTION OF EMBODIMENTS

### <<Printed object>>

The printed object of the present invention is
a printed object comprising a substrate and a first information code on the substrate, wherein
the first information code is composed of an infrared absorbent ink layer printed with an infrared absorbent ink, and
the infrared absorbent ink layer is configured such that when a relative spectral reflectance of a first laminate comprising
   a measuring substrate consisting of the same material as the substrate; and
   on the measuring substrate, a measuring infrared absorbent ink layer consisting of the same material as the infrared absorbent ink layer
is measured from the measuring infrared absorbent ink layer side, with the measuring substrate as a reference (reflectance of 100%),
the first laminate has a minimum relative reflectance value Rᵥᵢₛ₋ₘᵢₙ in the visible wavelength region of 400 nm to 730 nm being 50% or more; and
the first laminate has a minimum relative reflectance value Rᵢᵣ₋ₘᵢₙ in the infrared wavelength region of 800 nm to 2,500 nm being 75% or less.

The printed object of the present invention may further comprise a concealment layer, together with a substrate and an infrared absorbent ink layer on the substrate.

The concealment layer may be printed with an infrared non-absorbent ink on the substrate, such that at least a portion of the first information code is visually concealed, and
the concealment layer may be configured such that when a relative spectral reflectance of a second laminate comprising
a measuring substrate consisting of the same material as the substrate; and
a measuring concealment layer consisting of the same material as the concealment layer is measured from the concealment layer side, with the measuring substrate as a reference (reflectance of 100%),
the second laminate has the minimum relative reflectance value Rᵢᵣ₋ₘᵢₙ in the infrared wavelength region of 800 nm to 2,500 nm being 80% or more.

In the printed object of the present invention, it is necessary that the infrared absorbent ink layer satisfy the predetermined requirements for the relative spectral reflectance of the first laminate comprising
a measuring substrate consisting of the same material as the substrate constituting the printed object; and
on the measuring substrate, an infrared absorbent ink layer consisting of the same material as the infrared absorbent ink layer constituting the printed object measured from the measuring infrared absorbent ink layer side, with the measuring substrate as a reference (reflectance of 100%).

A minimum relative reflectance value Rᵥᵢₛ₋ₘᵢₙ in the visible region being 50% or more when the relative spectral reflectance of the first laminate is measured with the measuring substrate as a reference (reflectance of 100%) means that under visible light irradiation, the reflectance of the substrate, which consists of the same material as the measuring substrate, is close to the reflectance of the first information code composed of the infrared absorbent ink layer, which consists of the same material as the measuring infrared absorbent ink layer. In this case, the contrast between the substrate itself and the first information code is low, and thus identifying the first information code by visual observation is difficult. From the viewpoint of making the identification of the first information code by visual observation difficult, the closer to 100% the minimum relative spectral reflectance value Rᵥᵢₛ₋ₘᵢₙ in the visible region, the better. The value may be, for example, 55% or more, 57% or more, 60% or more, 62% or more, or 65% or more.

Even when the minimum relative spectral reflectance value Rᵥᵢₛ₋ₘᵢₙ in the visible region were 90% or less, 85% or less, 80% or less, 75% or less, or 70% or less, the difficulty of identifying the first information code under visible light irradiation is not impaired.

A minimum relative spectral reflectance value Rᵢᵣ₋ₘᵢₙ in the infrared region being 75% or less when the relative spectral reflectance of the first laminate is measured with the measuring substrate as a reference (reflectance of 100%) means that, in the infrared region, there is a region where the difference between the reflectance of the substrate, which consists of the same material as the measuring substrate, and the reflectance of the first information code composed of the infrared absorbent ink layer, which consists of the same material as the measuring infrared absorbent ink layer is sufficiently large. In this case, the first information code can be read with an information code reader (infrared information code reader) using infrared light as a light source. From the viewpoint of more reliably reading the first information code by an infrared information code reader more reliable, the smaller and the further from 100% the minimum relative spectral reflectance value Rᵢᵣ₋ₘᵢₙ in the infrared region, the better. The value may be, for example, 70% or less, 68% or less, 65% or less, 63% or less, or 60% or less.

Even when the minimum relative spectral reflectance value Rᵢᵣ₋ₘᵢₙ in the infrared region for the first laminate is 30% or more, 35% or more, 40% or more, 45% or more, or 50%, the reliability of the reading of the first information code by an infrared information code reader is not impaired.

It is preferable that the relative spectral reflectance of the first laminate satisfy the above requirements for a wide range in the infrared wavelength region of 800 nm to 2,500 nm, from the viewpoint of making the reading of the first information code more reliable regardless of the type of the infrared information code reader. From this viewpoint, the minimum relative spectral reflectance value Rᵢᵣ₋ₘₐₓ in the infrared region for the first laminate may be, for example, 75% or less, 73% or less, 70% or less, 68% or less, 66% or less, or 64% or less.

When the printed object of the present invention further comprises a concealment layer together with a substrate and an infrared absorbent ink layer on the substrate, it is necessary that the infrared absorbent ink layer satisfy the above requirements for the relative spectral reflectance of the first laminate comprising a measuring substrate consisting of the same material as the substrate and a measuring infrared absorbent in layer consisting of the same material as the infrared absorbent ink layer, measured with the measuring substrate as a reference (reflectance of 100%) Additionally, the concealment layer may satisfy the predetermined requirements for the relative spectral reflectance of the second laminate comprising a measuring substrate consisting of the same material as the substrate and a measuring concealment layer consisting of the same material as the concealment layer, measured from the measuring concealment layer side with the measuring substrate as a reference (reflectance of 100%).

When the relative spectral reflectance of the second laminate is measured with the measuring substrate as a reference (reflectance of 100%), the minimum relative reflectance value Rᵢᵣ₋ₘᵢₙ in the infrared region may be 80% or more. The minimum relative reflectance value Rᵢᵣ₋ₘᵢₙ in the infrared region of the second laminate being 80% or more means that the concealment layer consisting of the same material as the measuring substrate does not substantially absorb infrared light. When the first information code composed of an infrared absorbent ink layer is arranged between the substrate and the concealment layer, the first information code can be read through the concealment layer by an infrared information code reader. From the viewpoint of more reliably reading the first information code through the concealment layer by an infrared information code reader, the closer to 100% the minimum value Rᵢᵣ₋ₘᵢₙ in the infrared region for the relative spectral reflectance of the second laminate, the better. The value may be, for example, 85% or more, 90% or more, or 95%, or more, or 100%.

In the relative spectral reflectance of the second laminate, it is considered that the measuring substrate mainly contributes to the reflection of light in the infrared region. It is considered that the measuring concealment layer, without substantially reflecting light in the infrared region and without absorbing the light as described above, transmits a large portion of the irradiated infrared light. Therefore, in a printed object comprising a substrate (consisting of the same material as the measuring substrate), an infrared absorbent ink layer (consisting of the same material as the measuring infrared absorbent ink layer), and a concealment layer (consisting of the same material as the measuring concealment layer) in this order, it is possible to read the first information code through the concealment layer by an infrared information code reader.

The printed object of the present invention comprising a concealment layer, together with the substrate and the infrared absorbent ink layer constituting the first information code is a printed object having highly improved security on which an information code is printed, wherein the presence of the information code is very difficult to discern visually while the information code can be easily decipher by the user thereof.

Therefore, from another viewpoint of the present invention,
there is provided a printed object comprising a substrate, a first information code on the substrate, and a concealment layer, wherein
the first information code is composed of an infrared absorbent ink layer printed with an infrared absorbent ink,
the concealment print is printed with an infrared non-absorbent ink such that at least a portion of the first information code is visually concealed, and
when infrared light is used as a light source, the first information code is optically readable through the concealment layer.

When an information code is "optically readable", it means that a pattern of the information code can be optically detected and the encoded data arranged as the pattern can be restored (decoded) to an original state. The measuring substrate "consisting of the same material as the material constituting the printed object" means that factors which can affect spectroscopic measurement, such as material, thickness, thermal history, and surface condition, are substantially the same for the measuring substrate and the substrate constituting the printed object. The same applies to the measuring infrared absorbent ink layer and the measuring concealment layer.

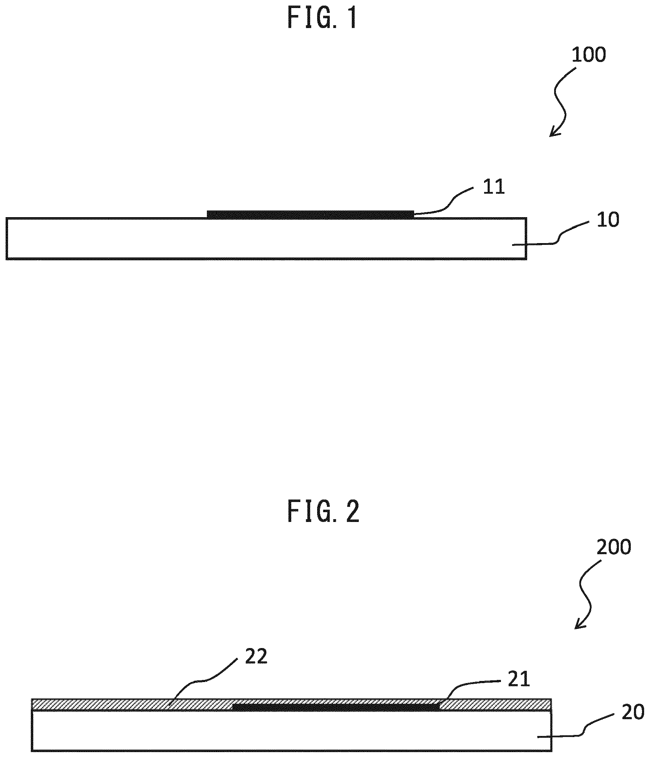

FIG. 1 and FIG. 2 illustrate examples of the embodiment of the printed object of the present invention as cross-sectional drawings.

The printed object (100) of FIG. 1 comprises a substrate (10) and a first information code. The first information code is composed of an infrared absorbent ink layer (11) printed on the substrate (10). The infrared absorbent ink layer (11) is configured such that when the relative spectral reflectance of a first laminate, comprising a measuring substrate consisting of the same material as the substrate (10) and a measuring infrared absorbent ink layer consisting of the same material as the infrared absorbent ink layer (11), is measured with the measuring substrate as a reference (reflectance of 100%), the minimum relative reflectance value Rᵥᵢₛ₋ₘᵢₙ in the visible region is 50% or more, and the minimum relative reflectance value Rᵢᵣ₋ₘᵢₙ in the infrared region is 75% or less. In the printed object (100), it is difficult to identify the first information code by visual observation under visible light irradiation, while the first information code can be read with an infrared information code reader.

The printed object (200) of FIG. 2 comprises a substrate (20), a first information code, and a concealment layer (22) in this order. The first information code is composed of an infrared absorbent ink layer (21) printed on the substrate (20). In the printed object (200), the concealment layer (22) is formed on the entire area of the substrate (20) so that the infrared absorbent ink layer (21) is completely visually concealed. As the concealment layer (22), a normal design including text information or an image may be printed.

The infrared absorbent ink layer (21) is configured such that when the relative spectral reflectance of a first laminate, comprising a measuring substrate consisting of the same material as the substrate (20) and a measuring infrared absorbent ink layer consisting of the same material as the infrared absorbent ink layer (21), is measured with the measuring substrate as a reference (reflectance of 100%), the minimum relative reflectance value Rᵥᵢₛ₋ₘᵢₙ in the visible region is 50% or more, and the minimum relative reflectance value Rᵢᵣ₋ₘᵢₙ in the infrared region is 75% or less. Further, the concealment layer (22) is configured such that when the relative spectral reflectance of a second laminate, comprising a measuring substrate consisting of the same material as the substrate (20) and a measuring concealment layer consisting of the same material as the concealment layer (22), is measured with the measuring substrate as a reference (reflectance of 100%), the minimum relative reflectance value Rᵢᵣ₋ₘᵢₙ in the infrared region may be 80% or more. In the printed object (200), it is very difficult to identify the first information code by visual observation under visible light irradiation, while the first information code can be read with an infrared information code reader.

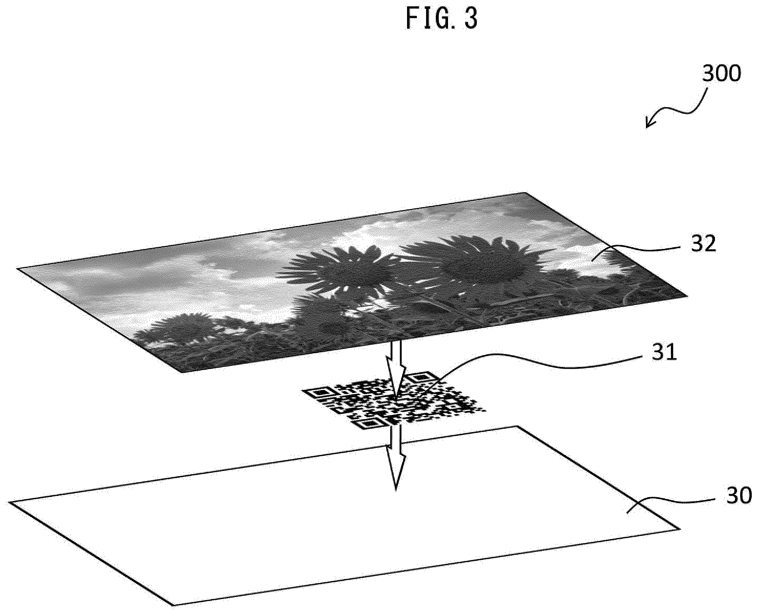

One example of a specific embodiment of the printed object illustrated in FIG. 2 is shown in FIG. 3 as a perspective drawing.

The printed object (300) of FIG. 3 comprises a substrate (30), an infrared absorbent ink layer (31) of the substrate (30), and a concealment layer (32) in this order. The infrared absorbent ink layer (31) constitutes the first information code (2D code). The concealment layer (32) is a photographic print formed over the entire area of the substrate (30). The infrared absorbent ink layer (31) constituting the first information code (2D code) is completely visually concealed by the concealment layer (32). In the printed object (300), the first information code is very difficult to identify by visual observation under visible light irradiation, while the first information code can be read with an infrared information code reader.

Hereinafter, the elements constituting the printed object of the present invention will be described in order.

### <Substrate>

As the substrate in the printed object of the present invention, a substrate commonly used in printed objects may be appropriately selected and used. The material constituting the substrate may be, for example, paper, a synthetic paper, a synthetic resin film, or a nonwoven. The substrate may typically be composed of paper. The paper may be, for example, high-quality paper, coated paper, matte coated paper, kraft paper, color paper, Japanese paper, or banknote paper. At least one of the one side and back side of the substrate may comprise a printing layer.

### <First information code>

The first information code is composed of an infrared absorbent ink layer on the substrate, printed with an infrared absorbent ink.

The first information code may be a barcode or a 2D code. However, it is preferable that the present invention be applied to a 2D code, which is capable of recording more information, since the advantage of concealing highly secure information from anyone other than the user of the information code can be further utilized.

The 2D code may include any code, such as QR code^{®}, FS code^{®}, SP code, VeriCode, MaxiCode, CP code, and Data Matrix.

The first information code may have one or more codes. When the first information code has two or more codes, the information codes may be the same type of code or different types of codes. Further, the first information code may include both a barcode and a 2D code.

### (Infrared absorbent ink layer)

The first information code is composed of an infrared absorbent ink layer printed on the substrate with an infrared absorbent ink. In other words, the infrared absorbent ink layer is formed by printing the pattern of the first information code on the substrate with an infrared absorbent ink.

### -Infrared absorbent ink-

The infrared absorbent ink for printing the infrared absorbent ink layer may be, for example, an infrared absorbent UV ink containing an infrared absorbent pigment and cured by UV.

The infrared absorbent UV ink may be, for example,
an infrared absorbent UV ink containing an infrared absorbent pigment, a solvent, an acrylic resin soluble in the solvent, a UV-curable acrylic monomer, and a photocuring agent (first infrared absorbent UV ink); or
an infrared absorbent UV ink containing an infrared absorbent pigment, a UV-curable urethane acrylate resin, and a UV-curable acrylic monomer not comprising any urethane bond (second infrared absorbent UV ink).

The infrared absorbent ink layer printed using the first infrared absorbent UV ink has excellent infrared absorption, together with excellent chemical resistance, particularly resistance to bases, and high resistance against sweat and detergents. Thus, it is advantageous to apply the printed object of the present invention to securities having an opportunity of coming into contact with sweat or a detergent, such as a body-worn personal data tag of an inpatient, a wristband-type event admission ticket, or a textile product (particularly clothing).

The infrared absorbent ink layer printed using the second infrared absorbent UV ink has excellent infrared absorption, together with excellent resistance to bases, particularly resistance to washing. Thus, a high degree of infrared absorbability can be maintained even when the printed object of the present invention is, for example, washed with clothes.

Hereinafter, the components of the first infrared absorbent UV ink and the second infrared absorbent UV ink will be described in order.

### (i) First infrared absorbent UV ink

The first infrared absorbent UV ink is an infrared absorbent UV ink containing an infrared absorbent pigment, a solvent, an acrylic resin soluble in the solvent, a UV-curable acrylic monomer, and a photocuring agent. In addition to these, the first infrared absorbent UV ink may further contain, for example, a dispersant or a solvent.

### (i-1) Infrared absorbent pigment

Examples of the infrared absorbent pigment in the first infrared absorbent UV ink include a tungsten-based infrared absorbent pigment, a tin-based infrared absorbent pigment, and an organic infrared absorbent pigment. One or more selected from these may be used.

Examples of the tungsten-based infrared absorbent pigment include pigments composed of composite tungsten oxide and tungsten oxide having a Magnéli phase. Examples of the tin-based infrared absorbent pigment include pigments composed of indium tin oxide. Examples of the organic infrared absorbent pigment include pigments composed of quinone-diimmonium salt, aminium salt, polymethine phthalocyanine, naphthalocyanine, and quaterrylene-bisimide.

Of these, tungsten-based infrared absorbent pigments are preferable, from the viewpoint of high infrared absorbability, high reliability in the reading of information codes, low visible light absorbability, and difficulty in discernment by visual inspection under visible light.

A particularly preferable tungsten-based infrared absorbent pigment is
a composite tungsten oxide, represented by general formula (1): MₓW_{y}O_{z}, wherein M is one or more elements selected from the group consisting of H, He, alkali metals, alkaline earth metals, rare earth metals, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
a tungsten oxide having a Magnéli phase, represented by general formula (2): W_{y}O_{z}, wherein W is tungsten; O is oxygen; y and z are each a positive number; and 2.45 ≤ z/y ≤ 2.999. A pigment composed of one or more selected from these may be used.

In the general formula (1), an alkali metal is a Group 1 element of the periodic table except the hydrogen atom. An alkaline earth metal is a Group 2 element of the periodic table except Be and Mg. A rare earth metal is Sc, Y, or a lanthanoid element.

The composite tungsten oxide represented by the general formula (1) comprises an element M. Since free electrons are generated and the absorption band from the free electrons is expressed in the near-infrared wavelength region, the composite tungsten oxide is suitable as a material that absorbs near-infrared radiation having a wavelength near 1,000 nm to generate heat.

When the value of x/y indicating the addition amount of the element M is greater than 0, a sufficient amount of free electrons are generated and a sufficient near-infrared absorption effect can be obtained. As the addition amount of the element M increases, the supply of free electrons increases, and the near-infrared absorption effect also increases. However, the effect saturates at an x/y value of about 1. Thus, it is preferable for the value of x/y to be 1 or less since the formation of an impurity phase in a microparticle-containing layer can be avoided. The value of x/y is preferably 0.001 or greater, 0.2 or greater, or 0.30 or greater, and is preferably 0.85 or less, 0.5 or less, or 0.35 or less. Ideally, the value of x/y is 0.33.

Particularly, it is preferable that the element M in the general formula (1) be one or more of Cs, Rb, K, Tl, In, Ba, Li, Ca, Sr, Fe, and Sn, from the viewpoint of improving the optical characteristics as a near-infrared absorbent material and weather resistance. It is particularly preferable that the M be Cs.

In the case of CsₓW_{y}O_{z} (0.25 ≤ x/y ≤ 0.35 and 2.2 ≤ z/Y ≤ 3.0), it is preferable that the lattice constants be 7.4060 Å or more and 7.4082 Å or less for the a-axis and 7.6106 Å or more and 7.6149 Å or less in the c-axis, from the viewpoint of optical characteristics in the near-infrared region and weather resistance.

It is preferable that the composite tungsten oxide represented by the general formula (1) have a hexagonal crystal structure or consist of a hexagonal crystal structure, since the transmission in the visible light wavelength region and the absorption in the near-infrared light wavelength region for the infrared absorbent material microparticles are improved. When cations of the element M are added and positioned in the voids of the hexagonal crystal, the transmission in the visible light wavelength region and the absorption in the near-infrared light wavelength region are improved. Generally, when an element M having a large ionic radius is added, hexagonal crystals are formed. Specifically, when an element having a large ionic radius, such as Cs, Rb, K, Tl, In, Ba, Sn, Li, Ca, Sr, or Fe, is added, it is easy to form hexagonal crystals. However, the present invention is not limited to these elements. The element M may be an element other than the ones above, as long as the additive element M is present in the hexagonal voids formed in the WO₆ units.

When the composite tungsten oxide having a hexagonal crystal structure has a uniform crystal structure, the addition amount of the additive element M preferably has an x/y value of 0.2 or greater and 0.5 or less, more preferably 0.30 or greater and 0.35 or less, and ideally 0.33. By setting the value of x/y to 0.33, it is considered that the additive element M is positioned in all of the hexagonal voids.

It is preferable that the composite tungsten oxide represented by the general formula (1) be treated with a silane coupling agent, since the composite tungsten oxide is imparted with excellent dispersibility, near-infrared absorption, and transparency in the visible light wavelength region.

In the tungsten oxide having a Magnéli phase represented by the general formula (2), the socalled "Magnéli phase" having a composition ratio in which the z/y value satisfies the relationship of 2.45 ≤ z/y ≤ 2.999 is chemically stable and has good absorption characteristic in the near-infrared light wavelength region, and is thus preferable as a near-infrared absorbent material.

In the general formulas (1) and (2), the z/y value indicates the level of control in the amount of oxygen. For the composite tungsten oxide represented by the general formula (1), since the z/y value satisfies the relationship of 2.2 ≤ z/y ≤ 3.0, the same oxygen control mechanism as in the tungsten oxide represented by the general formula (2) works, and additionally, even when z/y = 3.0, free electrons are supplied by the addition of the element M. It is more preferable that the z/y value satisfy the relationship of 2.45 ≤ z/y ≤ 3.0 in the general formula (1).

The oxygen atoms constituting the composite tungsten oxide and tungsten oxide may be partially substituted with halogen atoms derived from the starting compounds used during the production of the composite tungsten oxide and the tungsten oxide in the present invention, and such substitution is not an issue in the embodiment of the present invention. Therefore, the composite tungsten oxide and the tungsten oxide in the present invention include those in which the oxygen atoms have been partially substituted with halogen atoms.

For the infrared absorbent pigment of the present invention, the transparent color tone thereof is often bluish to greenish due to significant absorption of light in the near-infrared light wavelength region, particularly near the wavelength of 1,000 nm. However, since the developed color is pale, the printed object of the present invention comprising the infrared absorbent pigment is able to provide preferable designability regardless of having a first information code composed of an infrared absorbent ink layer.

The content of the infrared absorbent pigment in the first infrared absorbent UV ink may be, for example, 0.1% by weight or more, 0.5% by weight or more, 1.0% by weight or more, 2.0% by weight or more, or 3.0% by weight or more, and may be, for example, 15% by weight or less, 10% by weight or less, 8.0% by weight or less, 5.0% by weight or less, 3.0% by weight or less, or 1.0% by weight or less, when the total amount of the first infrared absorbent UV ink is 100% by weight.

The content of the infrared absorbent pigment in the first infrared absorbent UV ink may be, for example, 0.5% by weight or more, 1.0% by weight or more, 1.5% by weight or more, 2.0% by weight or more, 2.5% by weight or more, or 3.0% by weight or more, and may be, for example, 20.0% by weight or less, 15.0% by weight or less, 10.0% by weight or less, 8.0% by weight or less, or 5.0% by weight or less, when the solid content of the first infrared absorbent UV ink is 100% by weight. The content of the infrared absorbent pigment is typically 0.5% by weight or more and 15.0% by weight or less, preferably 1.5% by weight or more and 10.0% by weight or less, when the solid content of the first infrared absorbent UV ink is 100% by weight.

### (i-2) Acrylic resin

The acrylic resin used in the first infrared absorbent UV ink in the present invention may function as a binder resin in the first infrared absorbent UV ink.

As long as such an acrylic resin is soluble in the solvent described below, has a high affinity with the UV-curable acrylic monomer described below, and can be used without separating in the ink, the type thereof is not particularly limited.

Examples of the acrylic resin include polymers such as acrylic acid, acrylic acid ester, methacrylic acid, methacrylic acid ester, acrylamide, and acrylonitrile; and copolymers thereof. Particularly, acrylic urethane resin, styrene acrylic resin, and acrylic polyol resin can be used.

The glass transition temperature (Tg) of the acrylic resin is not particularly limited, but may be, for example, 0 °C or higher, 30 °C or higher, 50 °C or higher, or 70 °C or higher, and may be 150 °C or lower, 120 °C or lower, or 100 °C or lower.

The content of the acrylic resin in the first infrared absorbent UV ink may be 1.0% by weight or more, 3.0% by weight or more, 5.0% by weight or more, 10% by weight or more, or 15% by weight or more, and may be 40% by weight or less, 30% by weight or less, 20% by weight or less, 15% by weight or less, 10% by weight or less, or 8.0% by weight or less, when the total amount of the first infrared absorbent UV ink is 100% by weight.

### (i-3) UV-curable acrylic monomer

As the UV-curable acrylic monomer in the first infrared absorbent UV ink, an acrylic monomer conventionally used for UV inks can be used. The "acrylic monomer" in the present invention is a concept including not only a monomer but also an oligomer as a liquid at room temperature.

Examples of the UV-curable acrylic monomer include acrylates having an ethylenically unsaturated bond. Particularly, one or more selected from monofunctional acrylates, bifunctional acrylates, trifunctional or higher-polyfunctional acrylates, and oligomers thereof may be used.

Examples of the monofunctional acrylate include caprolactone acrylate, isodecyl acrylate, isooctyl acrylate, isomyristyl acrylate, isostearyl acrylate, 2-ethylhexyl-diglycol diacrylate, 2-hydroxybutyl acrylate, 2-acryloyloxyethyl hexahydrophthalic acid, neopentyl glycol acrylic acid benzoic acid ester, isoamyl acrylate, lauryl acrylate, stearyl acrylate, butoxyethyl acrylate, ethoxydiethylene glycol acrylate, methoxy-triethylene glycol acrylate, methoxy-polyethylene glycol acrylate, methoxydipropylene glycol acrylate, phenoxyethyl acrylate, phenoxy-polyethylene glycol acrylate, nonylphenol ethylene oxide adduct acrylate, tetrahydrofurfuryl acrylate, isobonyl acrylate, 2-hydroxyethyl acrylate, 2-hydroxypropyl acrylate, 2-hydroxy-3-phenoxypropyl acrylate, 2-acryloyloxyethyl-succinic acid, 2-acryloyloxyethyl-phthalic acid, and 2-acryloyloxyethyl-2-hydroxyethyl-phthalic acid.

Examples of the bifunctional acrylate include hydroxypivalic acid neopentyl glycol diacrylate, alkoxylated hexanediol diacrylate, polytetramethylene glycol diacrylate, trimethylolpropane acrylic acid benzoic acid ester, diethylene glycol diacrylate, triethylene glycol diacrylate, tripropylene glycol diacrylate, tetraethylene glycol diacrylate, polyethylene glycol (200) diacrylate, polyethylene glycol (400) diacrylate, polyethylene glycol (600) diacrylate, neopentyl glycol diacrylate, 1,3-butylene glycol diacrylate, 1,4-butanediol diacrylate, 1,6-hexanediol diacrylate, 1,9-nonanediol diacrylate, dimethylol-tricyclodecane diacrylate, and bisphenol A diacrylate.

Examples of the trifunctional or higher-polyfunctional acrylate include ethoxylated isocyanuric acid triacrylate, ε-caprolactone-modified tris-(2-acryloxyethyl) isocyanurate, pentaerythritol triacrylate, trimethylolpropane triacrylate, ditrimethylolpropane tetraacrylate, pentaerythritol tetraacrylate, dipentaerythritol polyacrylate, ethoxylated pentaerythritol tetraacrylate, and dipentaerythritol hexaacrylate.

Examples of the oligomer thereof include urethane acrylate, polyester acrylate, epoxy acrylate, silicone acrylate, and polybutadiene acrylate.

The content of the UV-curable acrylic monomer in the first infrared absorbent UV ink may be 20% by weight or more, 25% by weight or more, 30% by weight or more, 35% by weight or more, 45% by weight or more, or 50% by weight or more, and may be 60% by weight or less, 55% by weight or less, 50% by weight or less, 45% by weight or less, 40% by weight or less, or 35% by weight or less, when the total amount of the first infrared absorbent UV ink is 100% by weight.

### (i-4) Photocuring agent

The photocuring agent is a compound (UV curing agent) that generates radicals such as active oxygen by ultraviolet irradiation. A photocuring agent conventionally used for UV inks can be used. As long as the photocuring agent used in the present invention can photopolymerize the above UV-curable acrylic monomer, the type thereof is not particularly limited.

Examples of the photocuring agent include acetophenones such as acetophenone, α-aminoacetophenone, 2,2-diethoxyacetophenone, p-dimethylaminoacetophenone, 2-hydroxy-2-methyl-1-phenylpropan-1-one, benzyldimethylketal, 1 -(4-isopropylphenyl)-2-hydroxy-2-methylpropan-1-one, 4-(2-hydroxyethoxy)phenyl-(2-hydroxy-2-methylpropyl)ketone, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, 2-benzyl-2-dimethylamino-1-(4-morpholinophenyl)-butanone; benzoins such as benzoin, benzoin methyl ether, benzoin ethyl ether, benzoin-n-propyl ether, benzoin isopropyl ether, benzoin-n-butyl ether, benzoin isobutyl ether, benzoin dimethyl ketal, and benzoin peroxide; acylphosphine oxides such as 2,4,6-trimethoxybenzoin diphenyl phosphine oxide; benzyl and methylphenyl-glyoxyesters; benzophenones such as benzophenone, methyl-4-phenylbenzophenone, o-benzoyl benzoate, 2-chlorobenzophenone, 4,4'-dichlorobenzophenone, hydroxybenzophenone, 4-benzoyl-4'-methyldiphenylsulfide, acryl-benzophenone, 3,3',4,4'-tetra(t-butylperoxycarbonl)benzophenone, and 3,3'-dimethyl-4-methoxybenzophenone; thioxanthones such as 2-methylthioxanthone, 2-isopropylthioxanthone, 2,4-dimethylthioxanthone, 2,4-diethylthioxanthone, 2-chlorothioxanthone, and 2,4-dichlorothioxanthone; aminobenzophenones such as Michlerketone and 4,4'-diethylaminobenzophenone; tetramethylthiuram monosulfide; azobisisobutyronitrile; ditert-butyl peroxide; 10-butyl-2-chloroacridone; 2-ethylanthraquinone; 9,10-phenanthrenequinone; camphorquinone; and titanocenes. One or more selected from these can be preferably used.

A photocuring aid may be used in combination with the photocuring agent. The photocuring aid may be, for example, ethyl 4-dimethylaminobenzoate or isoamyl 4-dimethylaminobenzoate.

The amount of photocuring agent used may be 0.1 parts by weight or more, 0.5 parts by weight or more, 1.0 parts by weight or more, 2.0 parts by weight or more, or 3.0 parts by weight or more, and may be 20 parts by weight or less, 10 parts by weight or less, 8.0 parts by weight or less, 5.0 parts by weight or less, 3.0 parts by weight or less, or 1.0 parts by weight or less, with respect to 100 parts by weight of the UV-curable acrylic monomer.

### (i-5) Dispersant

The first infrared absorbent UV ink may contain a dispersant in order to enhance the dispersibility of the infrared absorbent pigment in the ink. Examples of the dispersant include compounds having a functional group such as an amine, a hydroxyl group, a carboxyl group, and an epoxy group. These functional groups can be adsorbed on the surface of the infrared absorbent pigment to prevent aggregation and have a function of dispersing the infrared absorbent pigment uniformly in the ink.

The content of the dispersant in the first infrared absorbent UV ink may be 0.1 parts by mass or more, 0.3 parts by mass or more, 0.5 parts by mass or more, 1.0 parts by mass or more, 1.5 parts by mass or more, or 2.0 parts by mass or more, and may be 15 parts by mass or less, 10 parts by mass or less, 8.0 parts by mass or less, 5.0 parts by mass or less, 3.0 parts by mass or less, 2.0 parts by mass or less, or 1.5 parts by mass or less, when the total amount of the first infrared absorbent UV ink is 100 parts by mass.

### (i-6) Solvent

The first infrared absorbent UV ink preferably used in the present invention may contain a solvent. A conventional UV ink normally does not contain a solvent. It has been considered that there is an advantage in terms of workability by not containing a solvent, such as not necessitating a step of removing the solvent. However, in the present invention, since it is possible to omit steps such as drying the solvent by incorporating the solvent into the UV-cured acrylic resin after printing with the first infrared absorbent UV ink, there is no particular disadvantage in workability even when the first infrared absorbent UV ink contains a solvent.

The solvent in the first infrared absorbent UV ink is not particularly limited as long as the solvent can disperse the above infrared absorbent pigment and dissolve the acrylic resin, the UV-curable acrylic monomer, and the photocuring agent, and the advantageous effects of the present invention can be obtained. Examples of the solvent include alcohols such as ethanol, propanol, butanol, isopropyl alcohol, isobutyl alcohol, and diacetone alcohol; ethers such as methyl ether, ethyl ether, and propyl ether; esters such as ethyl acetate; ketones such as acetone, methyl ethyl ketone, diethyl ketone, cyclohexanone, ethyl isobutyl ketone, and methyl isobutyl ketone; aromatic hydrocarbons such as toluene, xylene, and benzene; aliphatic hydrocarbons such as normal hexane, heptane, and cyclohexane; and glycol ethers such as propylene glycol monomethyl ether acetate and propylene glycol monoethyl ether. One or more selected from these may be used.

The solvent in the first infrared absorbent UV ink may contain, particularly,
a first solvent capable of dispersing the first infrared absorbent pigment, and
a second solvent compatible with the first solvent and capable of dissolving an acrylic resin.

The first infrared absorbent UV ink containing such a first solvent and second solvent can be relatively easily prepared by, for example, a method comprising a step of mixing a dispersion containing an infrared absorbent pigment and the first solvent with a resin composition containing an acrylic resin and the second solvent.

The solvent in the first infrared absorbent UV ink may further contain a diluting solvent together with the first solvent and the second solvent. In this case, the first solvent, the second solvent, and the diluting solvent may all be the same type of solvent, the same type for two thereof, or a different type of solvent for each of the three.

The first solvent, the second solvent, and the diluting solvent may each be appropriately selected from the solvents recited above. For example, a glycol ether may be used as the first solvent; one or more selected from, for example, aromatic hydrocarbons and aliphatic hydrocarbons may be used as the second solvent; and one or more selected from, for example, ethers, esters, ketones, aromatic hydrocarbons, and aliphatic hydrocarbons may be used as the diluting solvent.

The content of the solvents in the first infrared absorbent UV ink may be, for example, 10% by weight or more, 20% by weight or more, 25% by weight or more, 30% by weight or more, 35% by weight or more, or 40% by weight or more, and may be, for example, 60% by weight or less, 55% by weight or less, 50% by weight or less, 45% by weight or less, 40% by weight or less, or 35% by weight or less, when the total amount of the infrared absorbent ink is 100% by weight.

### (ii) Second infrared absorbent UV ink

The second infrared absorbent UV ink is an infrared absorbent UV ink containing an infrared absorbent pigment, a UV-curable urethane acrylate resin, and a UV-curable acrylic monomer not comprising any urethane bond. In addition to the above, the second infrared absorbent UV ink may contain a photocuring agent, and may further contain a dispersant or a solvent.

### (ii-1) Infrared absorbent pigment

In the second infrared absorbent UV ink, one or more selected from a tungsten-based infrared absorbent pigment, a tin-based infrared absorbent pigment, and an organic infrared absorbent pigment recited as the infrared absorbent pigment contained in the first infrared absorbent UV ink may be used as the infrared absorbent pigment. A tungsten-based infrared absorbent pigment is preferable as the infrared absorbent pigment in the second infrared absorbent UV ink.

The content of the infrared absorbent pigment in the second infrared absorbent UV ink may be 0.1% by weight or more, 0.5% by weight or more, 1.0% by weight or more, 1.5% by weight or more, or 2.0% by weight or more, and may be 20.0% by weight or less, 15.0% by weight or less, 14.0% by weight or less, 12.0% by weight or less, 10.0% by weight or less, 8.0% by weight or less, or 5.0% by weight or less, when the solid content of the second infrared absorbent UV ink is 100% by weight. The content of the infrared absorbent pigment in the second infrared absorbent UV ink is typically 0.1% by weight or more and 20.0% by weight or less, preferably 1.5% by weight or more and 10.0% by weight or less, when the solid content of the second infrared absorbent UV ink is 100% by weight.

### (ii-2) UV-curable urethane acrylate resin

The second infrared absorbent UV ink contains a UV-curable urethane acrylate resin. By containing the UV-curable urethane acrylate resin, the second infrared absorbent UV ink is imparted with ultraviolet curability, and it becomes possible to provide a printed object having excellent resistance to bases, particularly resistance to washing.

The UV-curable urethane acrylate resin used in the second infrared absorbent UV ink may be, for example, a compound comprising a urethane bond and an acryloyl group.

The UV-curable urethane acrylate resin can be cured with UV by having an acryloyl group in the molecular chain. Further, a hydrogen bond can be formed with another molecule by having a urethane bond in the molecular chain. As a result, it becomes possible to provide a printed object having excellent resistance to bases, particularly resistance to washing.

The acryloyl group contained in the UV-curable urethane acrylate resin is a group derived from acrylic acid. The acrylic acid may be of a monofunctional type or a polyfunctional type.

It is preferable that the UV-curable urethane acrylate resin comprise a plurality of acryloyl groups. The number of acryloyl groups contained in the UV-curable urethane acrylate resin may be 2 or more, 3 or more, 4 or more, 6 or more, 9 or more, or 12 or more, and may be 30 or less, 20 or less, 15 or less, 12 or less, 10 or less, or 8 or less. The number of acryloyl groups contained in the UV-curable urethane acrylate resin may be typically 3 or more and 9 or less.

When the number of acryloyl groups is 3 or more, crosslinking between molecules can be formed, and thus it is possible to further improve the resistance to bases, particularly resistance to washing.

The urethane bond of the UV-curable urethane resin may be formed by reacting an isocyanate group with a hydroxy group. The urethane bond of the UV-curable urethane acrylate resin used in the second infrared absorbent UV ink may be formed either from an aromatic isocyanate compound or an aliphatic isocyanate compound.

The compound comprising a hydroxy group for forming a urethane bond of the UV-curable urethane acrylate resin may be either a polyether-based or polyester-based compound, or may be a polymer or a low molecular weight diol.

Specifically, the UV-curable urethane acrylate resin used in the present invention may be a polymer having a certain molecular weight, an oligomer, or a prepolymer.

In the second infrared absorbent UV ink, the content of the UV-curable urethane acrylate resin may be 1% by weight or more, 2% by weight or more, 3% by weight or more, 5% by weight or more, 7% by weight or more, 10% by weight or more, 12% by weight or more, 15% by weight or more, or 20% by weight or more, and may be 50% by weight or less, 40% by weight or less, 30% by weight or less, 25% by weight or less, 20% by weight or less, or 15% by weight or less, when the solid content of the second infrared absorbent UV ink is 100% by weight. When the content falls within the above ranges, the infrared absorbent UV ink can provide a printed object with sufficient ultraviolet curability and excellent resistance to bases, particularly resistance to washing.

Further, in the second infrared absorbent UV ink, the content of the UV-curable urethane acrylate resin may be 1 part by weight or more, 2 parts by weight or more, 3 parts by weight or more, 5 parts by weight or more, 10 parts by weight or more, 12 parts by weight or more, 15 parts by weight or more, 40 parts by weight or more, or 50 parts by weight or more, and may be 150 parts by weight or less, 120 parts by weight or less, 100 parts by weight or less, 90 parts by weight or less, 80 parts by weight or less, 70 parts by weight or less, 60 parts by weight or less, 50 parts by weight or less, 40 parts by weight or less, 30 parts by weight or less, or 25 parts by weight or less, with respect to 100 parts by weight of the UV-curable acrylic monomer not comprising any urethane bond described below. When the content falls within the above ranges, the infrared absorbent UV ink is imparted with sufficient ultraviolet curability and can suppress the increase in viscosity of the infrared absorbent UV ink.

### (ii-3) UV-curable acrylic resin not comprising any urethane bond

In the second infrared absorbent UV ink, one or more selected from the UV-curable acrylic monomers recited as the ones which may be contained in the first infrared absorbent UV ink, other than urethane acrylate, may be used as the UV-curable acrylic monomer.

In the second infrared absorbent UV ink, the content of the UV-curable acrylic monomer not comprising any urethane bond may be 95% by weight or less, 90% by weight or less, 85% by weight or less, 80% by weight or less, 75% by weight or less, 70% by weight or less, 65% by weight or less, or 60% by weight or less, and may be 40% by weight or more, 45% by weight or more, 50% by weight or more, 60% by weight or more, 65% by weight or more, 70% by weight or more, or 75% by weight or more, when the solid content of the second infrared absorbent UV ink is 100% by weight.

### (ii-4) Photocuring agent

In the second infrared absorbent UV ink, one or more selected from the photocuring agents recited as the ones which may be contained in the first infrared absorbent UV ink may be used as the photocuring agent. Further, one or more selected from the ones recited as the photocuring aid contained in the first infrared absorbent UV ink may be used in combination with such a photocuring agent.

The content of the photocuring agent in the second infrared absorbent UV ink is not particularly limited, for example, an ultraviolet-curable urethane acrylate resin or an ultraviolet-curable acrylic monomer not comprising any urethane group, and may be 1 part by mass or more, 2 parts by mass or more, 3 parts by mass or more, 4 parts by mass or more, or 5 parts by mass or more, and 20 parts by mass or less, 15 parts by mass or less, 10 parts by mass or less, 8 parts by mass or less, or 6 parts by mass or less, with respect to a total of 100 parts by mass.

### (ii-5) Dispersant

In the second infrared absorbent UV ink, one or more selected from the dispersants recited as the ones which may be contained in the first infrared absorbent UV ink may be used as the dispersant. The content of the dispersant in the second infrared absorbent UV ink may be 0.1 parts by mass or more, 0.3 parts by mass or more, 0.5 parts by mass or more, 1.0 parts by mass or more, 1.5 parts by mass or more, or 2.0 parts by mass or more, and may be 15 parts by mass or less, 10 parts by mass or less, 8.0 parts by mass or less, 5.0 parts by mass or less, 3.0 parts by mass or less, 2.0 parts by mass or less, or 1.5 parts by mass or less, when the total amount of the second infrared absorbent UV ink is 100 parts by mass.

### (ii-6) Solvent

The second infrared absorbent UV ink preferably used in the present invention may contain a solvent in order to improve the dispersibility of the ink and adjust the viscosity of the ink. The solvent is not particularly limited as long as each component contained in the second infrared absorbent UV ink can be dispersed or dissolved in the solvent.

As the solvent in the second infrared absorbent UV ink, one or more selected from the solvent recited as the ones which may be contained in the first infrared absorbent UV ink may be used.

The solvent in the second infrared absorbent UV ink may contain, particularly,
a first solvent capable of dispersing an infrared absorbent pigment, and
if desired, a second solvent compatible with the first solvent and capable of dissolving a UV-curable urethane acrylate resin.

The second infrared absorbent UV ink containing such a first solvent and if desired, a second solvent can be prepared by, for example, a method comprising a step of mixing
a dispersion containing an infrared absorbent pigment and the first solvent, and
a UV-curable urethane acrylate resin or a solution in which a UV-curable urethane acrylate resin is dissolved in the second solvent.

The step of preparing the second infrared absorbent UV ink may further comprise a step of adding a diluting solvent to adjust the viscosity.

The content of the solvents in the second infrared absorbent UV ink may be 0.1% by weight or more, 0.5% by weight or more, 1% by weight or more, 3% by weight or more, or 5% by weight or more, and may be 50% by weight or less, 30% by weight or less, 20% by weight or less, 15% by weight or less, 10% by weight or less, 5% by weight or less, 3% by weight or less, or 1% by weight or less, when the total amount of the second infrared absorbent ink is 100% by weight.

### -Formation of infrared absorbent ink layer-

The infrared absorbent ink layer in the printed object of the present invention can be formed by, for example, printing a pattern including the first information code on a substrate, using the infrared absorbent ink as described above. The infrared absorbent ink layer may comprise a pattern other than the first information code.

The infrared absorbent ink layer can be printed by an appropriate printing method, such as inkjet printing, offset printing, or flexographic printing. However, in order to handle the printing of individual information that varies for each sheet, the printing of the infrared absorbent ink layer may be carried out particularly by inkjet printing.

### <Concealment layer>

The printed object of the present invention may further comprise a concealment layer in addition to the substrate and the infrared absorbent ink layer constituting the first information code on the substrate. The concealment layer may be printed on the substrate with an infrared non-absorbent ink such that at least a portion of the first information code is visually concealed.

### -Infrared non-absorbent ink-

The infrared non-absorbent ink may be a common ink that does not substantially contain an infrared absorbent pigment, particularly an ink that does not contain carbon black as an infrared absorbent pigment.

Any ink not containing an infrared absorbent pigment, particularly carbon black, can be used without any particular limitation as the infrared non-absorbent ink. Examples of the infrared non-absorbent ink include offset ink, planographic ink, gravure ink, flexographic ink, and screen ink.

The concealment layer is printed on the substrate such that at least a portion of the first information code is visually concealed. The concealment layer may be printed on the substrate such that the entire first information code is visually concealed. The concealment layer may have any design, such as a photograph, an illustration, or text information.

### (Second information code)

The concealment layer may comprise a second information code in addition to the first information. The second information code may be present in a manner that can be identified by visual observation under visible light.

The second information code may be printed simultaneously with the printing of the concealment layer as a portion of the concealment layer, or may be further printed on the printed concealment layer. In case of the latter, the second information code may be printed with an infrared non-absorbent ink.

At least a portion of the second information code may be present in a region where the first information code is present. In such an embodiment, the first information code can be read under infrared irradiation and the second information code can be read under visible light irradiation in the same region of the printed object. Thus, there is an advantage of being able to a very large amount of information by changing the wavelength of the emitted light in a single reading operation. Further, since the presence of the hidden first information code under the second information code is difficult to notice, the secrecy of confidential information is excellent.

The second information code may be a barcode or a 2D code.

### <<Application of printed object>>

The printed object of the present invention can be suitably applied to, for example, securities, certificates, packaging materials, and textile products.

### [EXAMPLES]

In the following Examples and Comparative Examples, the following raw materials were used for sample preparation.

### <Infrared absorbent pigment>

### (Cesium tungsten oxide)

Sunlight-shielding dispersion liquid "YMS-01A-2", manufactured by Sumitomo Metal Mining Co., Ltd., composition:
25% by weight of Cs_{0.33}WO₃
12.5% by weight of an additive (a dispersant and others)
62.5% by weight of a solvent (58.9% by weight of propylene glycol monomethyl ether acetate, 1.86% by weight of dipropylene glycol monomethyl ether, and 1.74% by weight of butyl acetate)

Sunlight-shielding dispersion liquid "YMF-10A-2", manufactured by Sumitomo Metal Mining Co., Ltd., composition:
17.5% by weight of Cs_{0.33}WO₃
11.0% by weight of an additive (a dispersant and others)
71.5% by weight of a solvent (69.7% by weight of butyl acetate and 1.8% by weight of 2-butanol)

Hereinafter, the sunlight-shielding dispersion liquid "YMS-01A-2" is referred to as "CsWO dispersion liquid (1)", the "YMF-10A-2" is referred to as "CsWO dispersion liquid (2)", and the infrared absorbent pigment Cs_{0.33}WO₃ contained in these CsWO dispersion liquids is referred to as "CsWO".

### (Carbon black)

Furnace black "R400R", manufactured by CABOT Corporation

### <Acrylic resin (binder resin)>

Solvent-based acrylic resin "ACRYDIC A-814", manufactured by DIC Corporation, composition:
50% by weight of an acrylic resin
50% by weight of a solvent (42.5% by weight of toluene and 7.5% by weight of ethyl acetate)

Hereinafter, the solvent of the solvent-based acrylic resin "ACRYDIC A-814" is referred to as "acrylic resin solvent".

### <UV-curable urethane acrylate resin>

UV-curable urethane acrylate resin "LUXYDIR WLS-373", 6 acryloyl groups/molecule, 100% by weight in resin content, manufactured by DIC Corporation

### <UV-curable acrylic monomer (photosensitive monomer)>

"BESTCURE UV monomer for dispersion", which is a UV-curable acrylic monomer not comprising any urethane group, 100% by weight in photosensitive monomer content, manufactured by T&K TOKA Corporation

### <Photocuring agent (UV curing agent)>

"IRGACURE 500", manufactured by BASF SE

### <<Example 1>>

### (1) Preparation of infrared absorbent ink

100 parts by weight of the CsWO dispersion liquid (1) (corresponding to 25 parts by weight of CsWO), 25 parts by weight of an acrylic resin solution (corresponding to 12.5 parts by weight of an acrylic resin (listed as "A-814" in the table), and 25.0 parts by weight of ethyl acetate were mixed. A mixture of 2,208 parts by weight of a photosensitive monomer and 92.0 parts by weight of a UV curing agent (the amount of UV curing agent was 4.0% by weight with respect to the total of the photosensitive monomer and the UV curing agent) was then added thereto. By stirring the mixture well, an infrared absorbent ink was prepared.

The solvent amount in the infrared absorbent ink thus obtained was 100 parts by weight in total. In addition, the CsWO concentration in the infrared absorbent ink was 1.0% by weight, and the CsWO concentration with respect to the solid content of the ink was 1.1% by weight.

### (2) Infrared absorbent ink printing (solid print and 2D code print)

Using the infrared absorbent ink obtained above, a solid print in a 20 mm × 20 mm square and a 13 mm × 13 mm QR code^{®} (version 5 (37 cells × 37 cells)) were printed by inkjet printing on a white OCR paper substrate manufactured by Oji Paper Co., Ltd. After printing, a solid print and a 2D code print were formed on the paper substrate by irradiating with a mercury lamp at an exposure amount of 80 W/cm² for 10 seconds to cure the ink, and a substrate/infrared absorbent ink layer laminate was obtained. When printing with the infrared absorbent ink, at least the region having the same shape and the same area as the solid print was not printed with the infrared absorbent ink, thereby ensuring a non-printing region where infrared absorbent ink printing did not occur.

Inkjet printing was carried out with the following apparatus and conditions.
Inkjet printer: product name "Pattering JET", manufactured by Tritek Co., Ltd.
Head: product name "KM512", manufactured by Konica Minolta, Inc.
Resolution: 360 dpi
Preset ink discharge rate: 10 g/m²

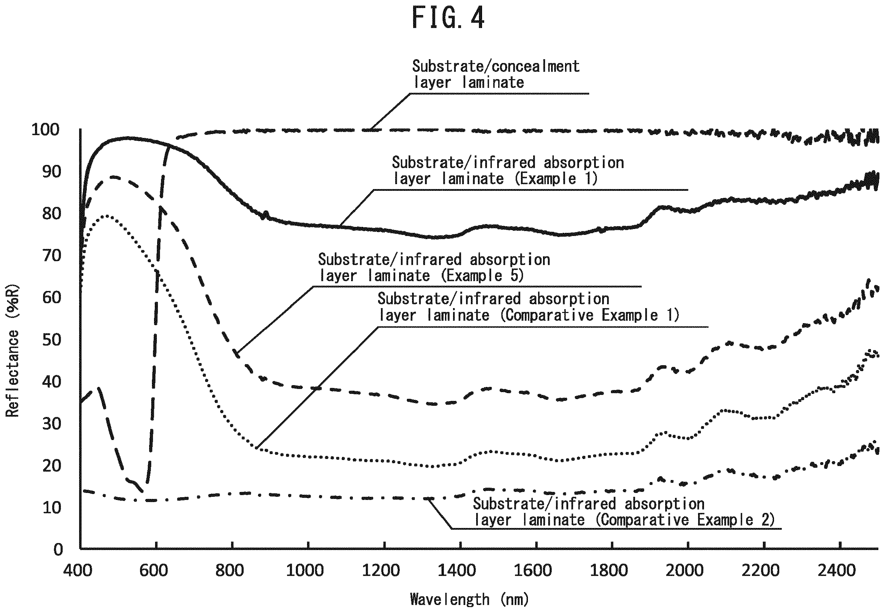

The spectral reflectance in the visible-infrared region was measured for the solid print of the substrate/infrared absorbent ink layer laminate obtained above. The results are shown in FIG. 4.

### (3) Printing of concealment layer

Using the sheet-fed offset ink "UV Carton GE Red" manufactured by T&K TOKA Corporation, a monochromatic solid concealment layer was printed on the infrared absorbent ink side of the substrate/infrared absorbent ink layer laminate so as to cover the solid print, the 2D code print, and the region to be printed to prepare a printed object sample. The ink used was an ink lacking infrared absorbability.

The concealment layer was printed by offset printing under the following conditions.
Printer: offset printer "RI Tester", manufactured by IHI Machinery and Furnace Co., Ltd.
Ink filling amount: 0.125 mL
Ink film thickness: about 1 µm

### (5) Evaluation

### (5-1) Evaluation of concealability (evaluation of color difference ΔE)

Using the colorimeter "SpectroEye" manufactured by X-Rite, the color difference ΔE between the region of the solid print with the infrared absorbent ink and the non-printing region was measured from above the concealment layer. The results are shown in Table 1A.

### (5-2) Evaluation of code readability

Using the 2D code reader "QB-30SU" manufactured by Denso Corporation, the region of the 2D code print was read using an infrared LED having a wavelength of 850 nm as the illumination from above the concealment layer, and the readability of the 2D code was examined.

The following operation was carried out during the reading.

With the camera portion of the 2D code reader facing upward, a transparent acrylic plate having a thickness of 2 mm was installed at a position 40 mm away from the camera. The 2D code print was placed on the transparent acrylic plate with the printed side of the print sample facing down so that the 2D code was positioned above the camera, and was then read. The operation of placing the print sample and reading the 2D code was repeated 10 times using the same sample of each color of the concealment layer, and the number of times readable of the 10 times was recorded. The results are shown in Table 1A.

### <<Examples 2 to 5 and Comparative Example 1>>

Except that the amounts of the photosensitive monomer and the UV curing agent in (1) Preparation of infrared absorbent ink were each changed as indicated in Table 1A and the CsWO concentration in the ink was adjusted as indicated in Table 1A, infrared absorbent inks were prepared in the same manner as in Example 1 and evaluated. The results are shown in Table 1A.

The UV curing agent amount was maintained at 4.0% by weight with respect to the total of the photosensitive monomer and the UV curing agent.

### <<Comparative Example 2>>

25 parts by weight of the carbon black "R400R" and a mixture of 2,352 parts by weight of a photosensitive monomer and 98.0 parts by weight of a UV curing agent (the amount of UV curing agent was 4.0% by weight with respect to the total of the photosensitive monomer and the UV curing agent) were mixed to prepare an infrared absorbent ink.

Except that the obtained infrared absorbent ink was used, the evaluation was carried out in the same manner as in Example 1. The results are shown in Table 1A.

### <<Reference Example 1>>

Except that the offset sheet-fed ink "UV Carton Ink" manufactured by T&K TOKA Corporation in "(3) Printing of concealment layer", a printed object sample was produced in the same manner as in Example 4 and evaluated. The ink used was an ink having infrared absorbability. The results are shown in Table 1.

### <<Example 6>>

### (1) Preparation of infrared absorbent ink

142.9 parts by weight of the CsWO dispersion liquid (2) (corresponding to 25 parts by weight of CsWO) and 125.3 parts by weight of a UV-curable urethane acrylate resin (listed as "WLS" in the table) were mixed. A mixture of 626.4 parts by weight of a photosensitive monomer and 30.1 parts by weight of a UV curing agent (the amount of UV curing agent was 4.0% by weight with respect to the total of the UV-curable urethane acrylate resin and the photosensitive monomer) was then added thereto. By stirring the mixture well, an infrared absorbent ink was prepared. This was then evaluated. The results are shown in Table IB.

The solvent amount in the infrared absorbent ink thus obtained was 102.1 parts by weight in total. In addition, the CsWO concentration in the infrared absorbent ink was 2.7% by weight, and the CsWO concentration with respect to the solid content of the ink was 3.0% by weight.

### [Table 1]

**Table 1A.**

| | Infrared absorbent ink composition | | | | | | | | | Concealment layer | | Evaluation of printed object | |
|---|---|---|---|---|---|---|---|---|---|---|---|---|---|
| | Infrared absorbent pigment | | Resin component | | | Additive (parts by weight) | Solvent (parts by weight) | Infrared | absorber concentration | Type of link | Presence of infrared absorbability | | |
| | | | . Binder resin | Photosensitive monomer | UV curing agent | | | in ink (wt%) | in solid content (wt%) | | | Concealability | Code readability |
| | Type | Amount (parts by weight) | A-814 (parts by weight) | BESTCURE (parts by weight) | IRG500 (parts by weight) | | | | | | | ΔE | Times read /10 times |
| Example 1 | CsWO | 25.0 | 12.5 | 2208 | 92.0 | 12.5 | 100.0 | 1.0 | 1.1 | GE red | N | 0.74 | 2 |
| Example 2 | CsWO | 25.0 | 12.5 | 1056 | 44.0 | 12.5 | 100.0 | 2.0 | 2.2 | GE red | N | 1.24 | 10 |
| Example 3 | CsWO | 25.0 | 12.5 | 643.2 | 26.8 | 12.5 | 100.0 | 3.0 | 3.5 | GE red | N | 2.10 | 10 |
| Example 4 | CsWO | 25.0 | 12.5 | 460.8 | 19.2 | 12.5 | 100.0 | 4.0 | 4.7 | GE red | N | 2.20 | 10 |
| Example 5 | CsWO | 25.0 | 12.5 | 336.0 | 14.0 | 12.5 | 100.0 | 5.0 | 6.2 | GE red | N | 4.61 | 10 |
| Comparative Example 1 | CsWO | 25.0 | 12.5 | 96.0 | 4.0 | 12.5 | 100.0 | 10.0 | 16.5 | GE red | N | 12.05 | 10 |
| Comparative Example 2 | R400R | 25.0 | - | 2352 | 98.0 | - | - | 1.0 | 1.0 | GE red | N | 23.54 | 10 |
| Reference Example 1 | CsWO | 25.0 | 12.5 | 336.0 | 14.0 | 12.5 | 100.0 | 5.0 | 6.2 | Carton black | Y | 1.84 | 0 |

**Table IB.**

| | Infrared absorbent ink composition | | | | | | | | | Concealment layer | | Evaluation of printed object | |
|---|---|---|---|---|---|---|---|---|---|---|---|---|---|
| | Infrared absorbent pigment | | Resin component | | | Additive (parts by weight) | Solvent (parts by weight) | Infrared absorber concentration | | Type of ink | Presence of infrared absorbability | | |
| | | | Urethane acrylate resin | Photosensitive monomer | UV curing agent | | | in ink (wt%) | in solid content (wt%) | | | Concealability | Code readability |
| | Type | Amount (parts by weight) | WLS (parts by weight) | BESTCURE (parts by weight) | IRG500 (parts by weight) | | | | | | | ΔE | Times read /10 times |
| Example 6 | CsWO | 25.0 | 125.3 | 626.4 | 30.1 | 15.7 | 102.1 | 2.7 | 3.0 | GE red | N | 3.64 | 10 |

In Tables 1A and 1B, the abbreviation of each component has the following meaning.

### <Infrared absorbent pigment>

CsWO: cesium tungsten oxide contained in the sunlight-shielding dispersion liquid "YMS-01A-2" or "YMF-10A-2", composition of Cs_{0.33}WO₃, manufactured by Sumitomo Metal Mining Co., Ltd.
R400R: furnace black, product name "R400R", manufactured by CABOT Corporation <Ink of concealment layer>
GE Red: offset sheet-fed ink, product name "UV Carton GE Red", manufactured by T&K TOKA Corporation
Carton Ink: offset sheet-fed ink, product name "UV Carton Ink", manufactured by T&K TOKA Corporation

In Tables 1A and 1B, Examples 1 to 6 and Comparative Examples 1 and 2 are examples in which an ink lacking infrared absorbability was used for printing the concealment layer.

### «Analysis Example»

### (1) Spectral reflectance measurement of substrate/infrared absorbent ink layer laminate

Each of the substrate/infrared absorbent ink layer laminate in Examples 1, 5, and 6 and Comparative Examples 1 and 2 was used as the first laminate, and the spectral reflectance in the visible-infrared region for each laminate was measured, with the substrate as a reference (reflectance of 100%). The minimum relative reflectance value Rᵥᵢₛ₋ₘᵢₙ in the visible region and the minimum and maximum relative reflectance values Rᵢᵣ₋ₘᵢₙ and Rᵢᵣ₋ₘₐₓ in the infrared region for each laminate, together with the wavelengths at which the values were observed, are shown in Table 2. The graphs thus obtained for Examples 1 and 5 and Comparative Examples 1 and 2 are shown in FIG. 4.

### (2) Spectral reflectance measurement of substrate/concealment layer laminate

### (2-1) Production of substrate/concealment layer laminate

The offset sheet-fed ink "UV Carton GE Red" manufactured by T&K TOKA Corporation was solid-printed on the same white OCR paper substrate used in the above Examples by offset printing in the same manner as in the Examples to produce a substrate/concealment layer laminate (second laminate).

### (2-2) Spectral reflectance measurement

Regarding the substrate/concealment layer laminate thus obtained, the spectral reflectance in the visible-infrared region was measured with the substrate as a reference (reflectance of 100%). The minimum relative reflectance value Rᵢᵣ₋ₘᵢₙ and the maximum relative reflectance value Rᵢᵣ₋ₘₐₓ in the infrared region for the laminate, together with the wavelengths at which the values were observed, are shown in Table 3. The graph thus obtained is shown in FIG. 4.

### [Table 2]

**Table 2. Spectral reflectance of substrate/infrared absorbent ink layer laminate**

| | Visible region | | Infrared region | | | |
|---|---|---|---|---|---|---|
| | Rᵥᵢₛ₋ₘᵢₙ | | Rᵢᵣ₋ₘᵢₙ | | Rᵢᵣ₋ₘₐₓ | |
| | Relative reflectance (%) | Wavelength (nm) | Relative reflectance (%) | Wavelength (nm) | Relative reflectance (%) | Wavelength (nm) |
| Example 1 | 69.5 | 400 | 74.0 | 1328 | 89.7 | 2488 |
| Example 5 | 60.8 | 730 | 34.4 | 1337 | 64.0 | 2475 |
| Example 6 | 79.0 | 400 | 59.5 | 1336 | 81.0 | 2488 |
| Comparative Example 1 | 40.5 | 730 | 19.6 | 1327 | 47.5 | 2492 |
| Comparative Example 2 | 11.5 | 578 | 11.9 | 1299 | 25.9 | 2492 |

### [Table 3]

**Table 3. Spectral reflectance of substrate/concealment layer laminate**

| | Infrared region | | | |
|---|---|---|---|---|
| | Rᵢᵣ₋ₘᵢₙ | | Rᵢᵣ₋ₘₐₓ | |
| | Relative reflectance (%) | Wavelength (nm) | Relative reflectance (%) | Wavelength (nm) |
| Substrate/concealment layer laminate | 96.1 | 2468 | ~100 | ≥2415 |

With reference to Table 1A, it was found that the readability of the information code in the printed object of Comparative Example 2, in which a carbon black was used as the infrared absorbent pigment in the infrared absorbent ink, was very satisfactory with the number of times readable at 10 out of 10 tries, but the ΔE value exceeded 20, and thus the concealability was unsatisfactory.

With reference to Tables 1A and 1B, it was found that in the printed objects of Examples 1 to 6, in which CsWO was used as the infrared absorbent pigment in the infrared absorbent ink, the ΔE values were as low as 4.61 or less, and thus the concealability was satisfactory. Regarding the code readability of all of these printed objects, the number of times readable out of 10 tries was 2 or more. Particularly, in the printed objects of Examples 2 to 6, in which the infrared absorbent pigment concentration per infrared absorbent ink solid content was 1.5% by weight or more, the number of times readable out of 10 tries was 10, and the code readability was very satisfactory.

In the printed object of Comparative Example 1, in which the infrared absorbent pigment concentration per the infrared absorbent ink solid content was increased to 16.5% by weight, the number of times readable was 10 out of 10 tries, and thus the code readability was satisfactory. However, the ΔE value exceeded 12, and thus the concealability was unsatisfactory.

In Table 1A, Reference Example 1 is an example in which an ink having infrared absorbability was used in the printing of the concealment layer. The printed object of Reference Example 1 has a ΔE value as low as 1.84, and thus the concealability was satisfactory. However, regarding the code readability, the printed object could not be read at all out of 10 tries.

With reference to Table 2, in the printed objects of the Examples with both excellent readability and concealability of the information code, the minimum value Rᵥᵢₛ₋ₘᵢₙ in the visible region was 50% or more and the minimum value Rᵢᵣ₋ₘᵢₙ in the infrared region was 75% or less in the spectral reflectance of the first laminate composed of the substrate and the infrared absorbent ink layer.

From the foregoing, it was verified that when a printed object comprising a substrate and an infrared absorbent ink layer constituting a first information code on the substrate has a minimum value Rᵥᵢₛ₋ₘᵢₙ in the visible region being 50% or more and a minimum value Rᵢᵣ₋ₘᵢₙ in the infrared region being 75% or less in the spectral reflectance for a first laminate composed of the substrate and the infrared absorbent ink layer, the printed object has both excellent readability and concealability of the information code.

## Claims

1. A printed object comprising a substrate and a first information code on the substrate, wherein
the first information code is composed of an infrared absorbent ink layer printed with an infrared absorbent ink, and
the infrared absorbent ink layer is configured such that when a relative spectral reflectance of a first laminate comprising
a measuring substrate consisting of a material same as the substrate; and
a measuring infrared absorbent ink layer consisting of a material same as the infrared absorbent ink layer on the measuring substrate
is measured from a measuring infrared absorbent ink layer side, with the measuring substrate as a reference (reflectance of 100%),
the first laminate has a minimum relative reflectance value Rᵥᵢₛ₋ₘᵢₙ in a visible wavelength region of 400 nm to 730 nm being 50% or more; and
the first laminate has a minimum relative reflectance value Rᵢᵣ₋ₘᵢₙ in an infrared wavelength region of 800 nm to 2,500 nm being 75% or less.

2. The printed object according to claim 1, wherein
the printed object further comprises a concealment layer,
the concealment layer is printed with an infrared non-absorbent ink on the substrate such that at least a portion of the first information code is visually concealed, and
the concealment layer is configured such that when a relative spectral reflectance of a second laminate comprising
a measuring substrate consisting of a material same as the substrate; and
a measuring concealment layer consisting of a material same as the concealment layer on the measuring substrate
is measured from a measuring concealment layer side, with the measuring substrate as a reference (reflectance of 100%),
the second laminate has a minimum relative reflectance value Rᵢᵣ₋ₘᵢₙ in an infrared wavelength region of 800 nm to 2,500 nm being 80% or more.

3. A printed object comprising a substrate, a first information code on the substrate, and a concealment layer, wherein
the first information code is composed of an infrared absorbent ink layer printed with an infrared absorbent ink,
the concealment layer is printed with an infrared non-absorbent ink on the substrate such that at least a portion of the first information code is visually concealed, and
when infrared light is used as a light source, the first information code is optically readable through the concealment layer.

4. The printed object according to claim 2 or 3, wherein the concealment layer further comprises a second information code, and
at least a portion of the second information code is present in a region where the first information code is present.

5. The printed object according to claim 4, wherein the second information code is a barcode or a 2D code.

6. The printed object according to any one of claims 1 to 5, wherein the first information code is a barcode or a 2D code.

7. The printed object according to any one of claims 1 to 6, wherein the infrared absorbent ink contains an infrared absorbent pigment and is an infrared absorbent UV ink cured by UV.

8. The printed object according to claim 7, wherein the infrared absorbent pigment is selected from a tungsten-based infrared absorbent pigment, a tin-based infrared absorbent pigment, and an organic infrared absorbent pigment.

9. The printed obj ect according to claim 8, wherein the infrared absorbent pigment is a tungsten-based infrared absorbent pigment selected from
a composite tungsten oxide, represented by general formula (1): MₓW_{y}O_{z}, wherein M is one or more elements selected from the group consisting of H, He, alkali metals, alkaline earth metals, rare earth metals, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
a tungsten oxide having a Magnéli phase, represented by general formula (2): W_{y}O_{z}, wherein W is tungsten; O is oxygen; y and z are each a positive number; and 2.45 ≤ z/y ≤ 2.999.

10. The printed object according to any one of claims 7 to 9, wherein the infrared absorbent UV ink contains an infrared absorbent pigment, a solvent, an acrylic resin soluble in the solvent, a UV-curable acrylic monomer, and a photocuring agent.

11. The printed object according to claim 10, wherein the solvent contains a first solvent capable of dispersing the infrared absorbent pigment and a second solvent compatible with the first solvent and capable of dissolving the acrylic resin.

12. The printed object according to any one of claims 7 to 9, wherein the infrared absorbent UV ink contains an infrared absorbent pigment, a UV-curable urethane acrylate resin, and a UV-curable acrylic monomer not comprising any urethane bond.

13. The printed object according to claim 12, wherein the infrared absorbent ink further contains a photocuring agent.

14. The printed object according to any one of claims 7 to 13, wherein the infrared absorbent pigment in the infrared absorbent ink has a content of 1.0% by weight or more and 10.0% by weight or less with respect to the solid content of the infrared absorbent ink.

15. The printed object according to any one of claims 1 to 14, which is a security, a certificate, a packaging material, or a textile product.
